# EUROPÄISCHE PATENTANMELDUNG

(11) **EP 2 159 151 A1**
(43) Veröffentlichungstag der Anmeldung: **03.03.2010**
(21) Anmeldenummer: 09010631.1
(22) Anmeldetag: 18.08.2009
(51) Int. Cl.: B62K 21/16, B62J 1/08

(54) **Schwenkgelenk für Fahrradlenker und Sattelstütze**

(30) Priorität: 29.08.2008 DE 102008045045
(71) Anmelder: Benedikt, Alfred, Karl, 80638 München (DE)
(72) Erfinder: Benedikt, Alfred, Karl, 80638 München (DE)
(74) Vertreter: Schmid, Nils T.F.

(57) **Zusammenfassung**

Ein Schwenkgelenk (5) für zwei miteinander zu koppelnde Bauteile, wie Stangen oder Rohre, umfassend: zwei mit dem jeweiligen Bauteil fest verbindbare und/oder verbundene Gelenkteile (21,23), wenigstens zwei vorbestimmte Schwenkpositionen, einen Rast- oder Schnappmechanismus zum Abgeben einer Rast- oder Schnappkraft, welche die Gelenkteile in die jeweilige Schwenkposition drängt und die zu überwinden ist, um die Gelenkteile aus der einen Schwenkposition in eine andere Schwenkposition zu verschwenken, und eine Feststelleinrichtung zum gegenseitigen, kraftschlüssigen Verspannen der Gelenkteile in deren jeweiligen Schwenkposition.

## Beschreibung

Die Erfindung betrifft im Allgemeinen ein Schwenkgelenk für zwei miteinander zu koppelnde Bauteile, wie Stangen oder Rohre, beispielsweise einer Skelettrahmenstruktur.

Eine Rahmenstruktur ist in vielerlei Anwendungsfällen geeignet, um einen stabilen, aber ebenso leichten Träger zu bilden. Die Rahmenstruktur kann beispielsweise bei Steigleitern, bei Sonnenschirmen, bei ausfahrbaren Sonnendächern, bei Regalsystemen, bei Zeltunterkünften, bei Regelmästen, bei Ski- oder Walkingstöcken, bei beweglichen Hebekränen, bei Flanschanbauten beispielsweise zum Tragen von Antennen, bei der Bildung von Gestellen beispielsweise für Tische oder Stühle, sowie auch bei Gehhilfen, etc., benutzt werden müssen.

Für solche Rahmenstrukturen kann es notwendig sein, einerseits einzelne Rahmenteile, wie Stangen und Rohre, zueinander beweglich zu machen, um beispielsweise die Montage zu erleichtern und eine Konstruktionsfreiheit bereitzustellen, andererseits auch hohe Belastungskräfte zwischen den Rahmenteilen zu übertragen. Dabei sollen Lastkräfte von mehreren 100 kg bis zu mehreren Tonnen, insbesondere bis zu 4 Tonnen, an Lastkräften übertragbar sein.

Der Erfinder hat seine Erfindung insbesondere im Hinblick auf eine Lenkerkonstruktion oder Sattelstangenkonstruktion für ein Fortbewegungsmittel, wie ein Fahrrad oder einen Roller, geschaffen. Ein Lenker hat üblicherweise eine Lenkerstange, bestehend aus zwei diametral gegenüberliegenden Greifabschnitten und einem Mittelbereich, an denen der Lenkervorbau des Fortbewegungsmittels anzubringen ist.

Es ist aus DE 101 55 889 B4 ein Lenker bekannt, bei dem die Greifabschnitte über ein Schwenkgelenk von einer aktiven Lenkstellung in eine passive Verstauungsstellung verschwenkbar ist. Das Schwenkgelenk hat einen Rastmechanismus, um die Greifabschnitte in verschiedene Schwenkstellungen zu schwenken und sie dort lediglich gegen deren eigenen Gewichtskraft halten zu können. Dieser bewährte Schwenkgelenkrastmechanismus gibt dem Benutzer eines Fahrrads die Möglichkeit, das Fortbewegungsmittel platzsparend zu verstauen, weil die die seitliche Abmessung bestimmenden Greifabschnitte raumsparend abgeschwenkt werden können. Auf diese Weise ist es beispielsweise möglich, Fahrständer mit einer größeren Räderdichte zu bestücken. Um die Greifabschnitte nur in der nicht abgeschwenkten Lenkstellung zu arretieren, ist eine bezüglich des Schwenkgelenks separate Überschubhülse vorgesehen, welche einen Kraftübertrag zwischen den Gelenkteilen des Schwenkgelenks in der Lenkstellung während des Fahrbetriebs sicherstellt.

Es ist Aufgabe der Erfindung, ein einfach bedienbares und günstig herstellbares Schwenkgelenk für zwei miteinander zu koppelnde Bauteile bereitzustellen, die einerseits eine freie Schwenkbeweglichkeit bietet, allerdings in den Schwenkpositionen ergonomisch einfach gelangen kann und dort ausreichend stabil ist, um hohe Belastungskräfte zu übertragen, insbesondere einen Lenker für ein Fortbewegungsmittel bereitzustellen, von dem wenigstens ein Greifabschnitt in verschiedene vorbestimmte Schwenkpositionen relativ zu einem Mittelbereich des Lenkers gestellt werden kann, wobei ein sicherer Fahrbetrieb in jeder der möglichen Schwenkposition sicherzustellen.

Insbesondere ist es Aufgabe der Erfindung, ein Schwenkgelenk zu schaffen, das neben der Möglichkeit, in verschiedene vorbestimmte Schwenkpositionen geschwenkt zu werden, wobei in jeder Schwenkposition hohe Belastungskräfte von bis zu 4 Tonnen zwischen den Gelenkteilen übertragen werden können, ohne dass bezüglich dem Schwenkgelenk externe Zusatzbauteile zur Sicherung der Schwenkposition verwendet werden müssen.

Diese Aufgabe wird durch die Merkmale von Anspruch 1 gelöst.

Danach ist ein Schwenkgelenk für zwei miteinander zu koppelnde Bauteile, wie Stangen oder Rohre, vorgesehen, die zwar mit dem jeweiligen Bauteil fest verbindbare und/oder verbundene Gelenkteile umfasst. Dabei können die Gelenkteile durchaus auch mit dem jeweiligen zu koppelnden Bauteil aus einem Materialstück, vorzugsweise Metallstück, gefertigt sein. Das erfindungsgemäße Schwenkgelenk hat wenigstens zwei vorbestimmte Schwenkpositionen und einen Rast- oder Schnappmechanismus zum Abgeben einer Rast- oder Schnappkraft. Die Rast- oder Schnappkraft kann beispielsweise durch eine Federvorspannung realisiert sein, die stets beim Verschwenken wie auch in den Schwenkpositionen wirkt. Die Rast- oder Schnappkraft hat die Aufgabe, die Gelenkteile in die jeweilige Schwenkposition zu drängen, insbesondere einschnappen zu lassen. Die Rast- oder Schnappkraft ist zu überwinden, um die Gelenkteile aus der einen Schwenkposition in eine andere Schwenkposition zu verlagern. Erfindungsgemäß hat das Schwenkgelenk zusätzlich eine Feststelleinrichtung, welche die Gelenkteile in allen deren jeweiligen Schwenkpositionen gegenseitig kraftschlüssig verspannt. Dabei wird ein und dieselbe Verstelleinrichtung herangezogen, um die Gelenkteile in den jeweiligen Schwenkpositionen zu verspannen. Dies bedeutet, dass kein zusätzliches Bauteil an dem Schwenkgelenk eingesetzt werden muss, um die Gelenkteile in allen Schwenkpositionen zu befestigen. Es ist möglich, ein Schwenkgelenk mit einer einzigen Feststelleinrichtung bereitzustellen, die die Gelenkteile miteinander verspannt, um dadurch hohe Kräfte zwischen den Gelenkteilen übertragen zu können.

Bei einer bevorzugten Ausführung der Erfindung ist eine Rast- oder Schnappkraftrichtung parallel der Verspannkraftrichtung der Feststelleinrichtung ausgerichtet. Insbesondere fällt die Kraft- oder Schnappkraftrichtung mit der Verspannkraftrichtung zusammen. Auf diese Weise kann eine sehr kompakte Schwenkgelenkstruktur ausgebildet werden. Zudem dienen sowohl die Verspannkraft als auch die Rast- oder Schnappkraft dazu, eine sichere Übertragung der Lastkräfte zwischen den Schwenkteilen sicherzustellen.

Bei einer Weiterbildung der Erfindung ist ein Rast- oder Schnappkraftrichtung parallel einer Schwenkachse des Schwenkgelenks ausgerichtet. Insbesondere fällt die Rast- oder Schnappkraftrichtung mit der Schwenkachse zusammen.

Vorzugsweise drücken die Rast- oder Schnappkraft und eine Verspannkraft der Feststelleinrichtung der Gelenkteile aufeinander zu.

Bei einer bevorzugten Ausführung der Erfindung hat der Rast- oder Schnappmechanismus eine elastisch verformbare Feder, insbesondere eine vorgespannte Druckfeder. Vorzugsweise ist die Druckfeder als Schraubenfeder ausgeführt.

Bei einer Weiterbildung der Erfindung hat die Feststelleinrichtung einen Spannzustand, in dem die Gelenkteile gegeneinander verspannt sind und einen Freigabezustand, in dem die Gelenkteile entgegen der Rast- oder Schnappkraft des Rast-Schnappmechanismus insbesondere durch eine manuelle Betätigungskraft aus der jeweiligen Schwenkposition befreibar sind. Dabei können die Gelenkteile in dem Freigabezustand der Feststelleinrichtung insbesondere in einer Schwenkachsenrichtung vorzugsweise durch manuelle Betätigungskraft voneinander weg verlagert werden, um einen formschlüssigen, in Schwenkrichtung unverrückbaren Eingriff der Gelenkteile in einer Schwenkposition wieder zu lösen.

Vorzugsweise sind die Gelenkteile in dem Freigabezustand und bei Verlagerung aus dem formschlüssigen Eingriff insbesondere stufenlos um eine Schwenkachse des Schwenkgelenks verschwenkbar.

Bei einer Weiterbildung der Erfindung erzeugt die Feststelleinrichtung eine Verspannkraft zwischen den Gelenkteilen, deren Richtung parallel einer Rast- oder Schnappkraftrichtung des Rast-Schnappmechanismus und/oder einer Schwenkachse des Schwenkgelenks ausgerichtet ist, insbesondere mit der Rast- oder Schnappkraftrichtung und/oder der Schwenkachse zusammenfällt.

Bei einer bevorzugten Ausführung der Erfindung hat das erfindungsgemäße Schwenkgelenk außerdem einen starren Mitnehmer, der derart mit einer Feder des Rast- oder Schnappmechanismus zusammenwirkt, dass die Gelenkteile aufeinander zu gedrückt werden, um insbesondere in Anschlag und dem damit einhergehenden in Schwenkrichtung unverrückbaren, formschlüssigen Eingriff zu kommen. Durch die Feder des Rast- oder Schnappmechanismus nimmt der Mitnehmer ein Gelenkteil mit und verlagert es auf das andere ortsfeste Gelenkteil zu.

Vorzugsweise wirkt der starre Mitnehmer derart mit der Feststelleinrichtung zum Verspannen der Gelenkteile zusammen, dass die Gelenkteile gegeneinander gedrückt werden, insbesondere dass eine Vorspannung einer Feder des Rast-Schnappmechanismus beim Verspannen durch die Feststelleinrichtung erhöht wird.

Bei einer bevorzugten Ausführung der Erfindung hat die Feststelleinrichtung einen Schnellspanner mit einem Drehexzenter oder einen Schraubmechanismus, wobei ein Handbetätigungsteil der Feststelleinrichtung bei dessen Betätigung den Mitnehmer verlagert, so dass der Mitnehmer ein Gelenkteil mitnimmt und auf das andere Gelenkteil zu bewegen kann.

Vorzugsweise ist zwischen der Feststelleinrichtung und dem dazu benachbarten Gelenkteil ein Pufferelement insbesondere aus einem Elastomer angeordnet. Beispielsweise kann für das Pufferelement ein Elastomerteil in Form einer Beilagscheibe herangezogen werden, wobei beispielsweise das Elastomermaterial verwendet wird, das unter der Markenbezeichnung FIBROFLEX^{®} vertrieben wird. Mit Hilfe des Pufferelements können sicher und schonend hohe Spannkräfte zwischen den Gelenkteilen durch die Feststelleinrichtung eingeleitet werden.

Bei einer Weiterbildung der Erfindung sind zur Befestigung der vorbestimmten Schwenkpositionen Formschlüsse der Gelenkteile miteinander vorgesehen, durch welche eine relative Schwenkbewegung der Gelenkteile um eine Schwenkachse der Schwenkgelenks blockiert ist.

Vorzugsweise hat jedes Gelenk eine Gelenkfläche, wobei die sich gegenüberliegenden Gelenkflächen der Gelenkteile in den wenigstens zwei vorbestimmten Schwenkpositionen aneinander liegen. Dabei können die Gelenkflächen größtenteils plan oder eben sein.

Es sind die Gelenkflächen, die eine Schwenkebene des Schwenkgelenks definieren, zu der eine Schwenkachse des Schwenkgelenks lotrecht steht. In dem oben genannten Freigabezustand befinden sich die Gelenkflächen in einem parallelen Abstand zueinander.

Zur Bildung des oben genannten Formschlusses, durch den die Gelenkteile in Schwenkrichtung unverrückbar sind, kann vorzugsweise eine der Gelenkflächen wenigstens einen Rastvorsprung aufweisen, der formkomplementär zu wenigstens zwei Rastaussparungen in der anderen Gelenkfläche ausgebildet ist und insbesondere sich senkrecht von der Gelenkfläche weg erstreckt. Dabei kann der wenigstens eine Rastvorsprung insbesondere vollständig in die jeweilige Rastaussparung passen, um die wenigstens zwei vorbestimmten Schwenkpositionen festzulegen.

Vorzugsweise sind zwei bis 360 oder 720 Rastvorsprünge, vorzugsweise 4, 6, 8, 12 oder 24, vorgesehen, denen 2, 3 oder 4 Rastaussparungen zugeordnet sind, und umgekehrt.

Dabei können die Rastvorsprünge und die Rastaussparungen in äquidistanten Abständen zueinander insbesondere auf konzentrischen Kreisbahnen gleichen Radius angeordnet sein.

Bei einer bevorzugten Ausführung der Erfindung haben die Gelenkteile jeweils eine Gelenkkopfhälfte. Dabei kann jede Gelenkkopfhälfte eine von einer Gelenkfläche abgewandte, im Wesentlichen teilsphärische Außenseite aufweisen.

Bei einer Weiterbildung der Erfindung können die Rastvorsprünge durch in entsprechende Löcher in der Gelenkkopfhälfte eingepresste Stifte ausgebildet sein. Alternativ können die Rastvorsprünge und die jeweilige Gelenkkopfhälfte sowie ein gegebenenfalls an der Gelenkkopfhälfte anschließender Befestigungsarm des Gelenkteils aus einem Materialstück, insbesondere Metallstück, gefertigt sein.

Bei einer Weiterbildung der Erfindung weisen die Gelenkteile im montierten Zustand des Schwenkgelenks miteinander fluchtende Bohrungen auf, durch die sich ein Mitnehmer erstreckt, der insbesondere an einem Ende einen Mitnehmerkopf aufweist, wobei an dessen anderem Ende die Feststelleinrichtung angreift, um die Spannkräfte zwischen den Gelenkteilen einzuleiten.

Vorzugsweise ist zwischen dem Mitnehmerkopf und dem benachbarten Gelenkteil eine Feder, insbesondere eine Schraubendruckfeder, angeordnet, welche die Rast- oder Schnappkraft den Gelenkteilen über den Mitnehmer mitteilt.

Bei einer Weiterbildung der Erfindung hat das dem Mitnehmerkopf benachbarte Gelenkteil eine Vertiefung, in der der Mitnehmerkopf zumindest in einem Spannzustand der Feststelleinrichtung insbesondere vollständig formkomplementär versenkt ist. Dabei können der versenkte Mitnehmerkopf und die Außenseite des Gelenkteils eine kontinuierliche, insbesondere sphärische Fläche bilden.

Des Weiteren betrifft die Erfindung eine Baugruppe, die aus einem ortsfesten Langbauteil, wie einer Stange oder einem Rohr, einem zweiten beweglichen Langbauteil, wie einer Stange oder einem Rohr, und einem erfindungsgemäßen Schwenkgelenk besteht. Dabei kann der Mitnehmerkopf eine Längsrichtung aufweisen, die in einer Längsrichtung des ortsfesten Langbauteils zusammenfällt.

Bei einer bevorzugten Ausführung der Erfindung ist die Baugruppe zumindest ein Teil einer Skelett-Rahmenstruktur, die aus mehreren miteinander zu verbindenden Stangen oder Rohren gebildet ist.

Vorzugsweise ist die Baugruppe ein Lenker für ein Fortbewegungsmittel. Alternativ kann die Baugruppe auch eine Sattelstütze sein.

Weitere Eigenschaften, Vorteile und Merkmale der Erfindung werden durch die folgende Beschreibung bevorzugter Ausführungen der Erfindung anhand der beiliegenden Zeichnungen deutlich, in denen zeigen:
- Figur 1: eine schematische Seitenansicht eines Teils eines Fahrrads, an dem ein erfindungsgemäßes Schwenkgelenk für den Lenker und für die Sattelstütze vorgesehen ist;
- Figur 2: eine schematische Querschnittsansicht eines erfindungsgemäßen Schwenkgelenks;
- Figur 3: eine schematische Querschnittsansicht eines erfindungsgemäßen Schwenkgelenks in einer weiteren Ausführung;
- Figuren 4a-c: verschiedene Seitenansichten eines Mitnehmers des erfindungsgemäßen Schwenkgelenks gemäß den Figuren 2 und 3;
- Figuren 5a-d: verschiedene Seiten- und Teilquerschnittsansichten eines Gelenkteils des erfindungsgemäßen Schwenkgelenks gemäß den Figuren 2 und 3;
- Figuren 6a-c: verschiedene Seiten- und Teilquerschnittsansichten eines weiteren Gelenkteils des erfindungsgemäßen Schwenkgelenks gemäß den Figuren 2 und 3; und
- Figuren 7a, b: verschiedene Seiten- und Teilquerschnittsansichten eines Betätigungshebels einer Feststelleinrichtung des erfindungsgemäßen Schwenkgelenks gemäß den Figuren 2 und 3.

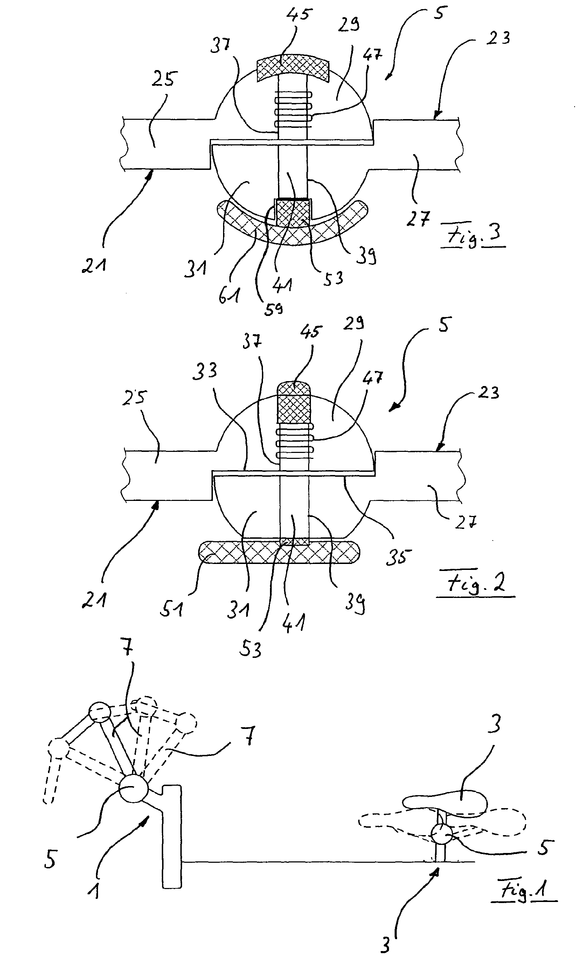

In Figur 1 ist ein erfindungsgemäßes Fahrrad teilweise dargestellt, bei dem ein erfindungsgemäßer Lenkervorbau 1 und eine erfindungsgemäße Sattelstütze 3 mit einem erfindungsgemäßen Schwenkgelenk 5 versehen ist. Der Lenkervorbau 1 ist mit einer Lenkerstange (nicht näher dargestellt) verbunden, an der zwei Greifabschnitte jeweils über das Schwenkgelenk 5 gekoppelt sind. In Figur 1 ist nur ein Greifabschnitt 7 und ein Schwenkgelenk 5 dargestellt.

Die Sattelstütze 3 ist durch ein Schwenkgelenk 5 in einem sattelfernen, ortsfesten Rohrabschnitt und in einen sattelnahen, schwenkbaren Rohrabschnitt unterteilt, welcher unterschiedliche Positionen des Sattels 9 zulässt.

Das Schwenkgelenk 5 kann unterschiedliche Schwenkpositionen für den jeweiligen Greifabschnitt 7 sowie für den Sattel 9 bereitstellen, wobei das Schwenkgelenk in der jeweiligen Schwenkposition derart arretiert ist, dass Belastungskräfte zwischen der Lenkstange und dem Greifabschnitt 7 sowie den Rohrabschnitten der Sattelstütze bis zu 4 Tonnen ohne Weiteres sicher übertragen werden können.

Auch weitere Einsatzgebiete für das erfindungsgemäße Schwenkgelenk 5 sind möglich, wie in der Beschreibungseinleitung angegeben ist.

In Figur 2 ist das erfindungsgemäße Schwenkgelenk 5 in einer ersten Ausführung dargestellt. Das erfindungsgemäße Schwenkgelenk 5 hat als Hauptbestandteile ein erstes Gelenkteil 21 und ein zweites Gelenkteil 23, die einen langgestreckten Armfortsatz 25, 27 aufweisen, an dem ein Rohr- oder Stabteil einer Rahmenstruktur (nicht dargestellt) befestigbar ist. Zudem hat das erste und zweite Gelenkteil 21, 23 jeweils ein Gelenkkopfhälfte 29, 31, die aus einem Vollmaterial gebildet ist. Der Armfortsatz 25, 27 und die jeweiligen Gelenkkopfliälften 29, 31 können aus einem Metallstück gefertigt, insbesondere gefräst sein.

Jede Gelenkkopfhälfte 29, 31 definiert eine plane Gelenkfläche 33, 35, welche in dem in Figur 2 gezeigten Zustand aneinander liegen und die Schwenkebene des Schwenkgelenks 5 definieren.

In den Gelenkkopfhälften 29, 31 ist jeweils eine Bohrung 37, 39 ausgebildet, die im montierten zustand des Schwenkgelenks miteinander fluchten, so dass ein stabförmiger Mitnehmer 41 sich durch die Bohrungen 37, 39 hindurch erstrecken kann. Die Mittelachse der Bohrungen 37, 39 definieren die Schwenkachse S des Schenkgelenks.

Zwischen einem Mitnehmerkopf 45 des Mitnehmers 41 und der Gelenkkopfhälfte 29 des esten Gelenkteils 21 ist eine vorgespannte Schraubenfeder 47 vorgesehen, deren Vorspannung das zweite Gelenkteil 23 gegen das erste Gelenkteil 21 drückt.

An dem dem Mitnehmerkopf 45 gegenüberliegenden Ende des Mitnehmers 41 ist ein Betätigungshebel 51 aufgeschraubt, wobei zwischen dem Betätigungshebel 51 und der Außenseite des zweiten Gelenkteils 23 eine Pufferbeilagscheibe 53 aus einem Elastomermaterial angeordnet ist.

Bei drehender Betätigung des Betätigungshebels 51 wird der Mitnehmer 41 und insbesondere der Mitnehmerkopf 45 abhängig von der je nach Gewindesteigung hin zum Betätigungshebel 51 verlagert, wodurch die Gelenkteile 21, 23 gegeneinander verspannt werden können.

Die Ausführung des Schwenkgelenks 5 gemäß Figur 3 unterscheidet sich von der Ausführung gemäß Figur 2 darin, dass statt dem Drehhebel 51 ein Drehring 61 verwendet wird und dass der Mitnehmerkopf 45 mit dessen Längsrichtung in Längsrichtung der Armfortsätze 25, 27 ausgerichtet ist. Zudem ist an der drehringseitigen Außenseite der Gelenkkopfhälfte 31 des zweiten Gelenkteils 23 im Bereich der Bohrung 39 eine Ausnehmung 59 ausgebildet, in der formkomplementär die Pufferbeilagscheibe 53 eingepasst ist.

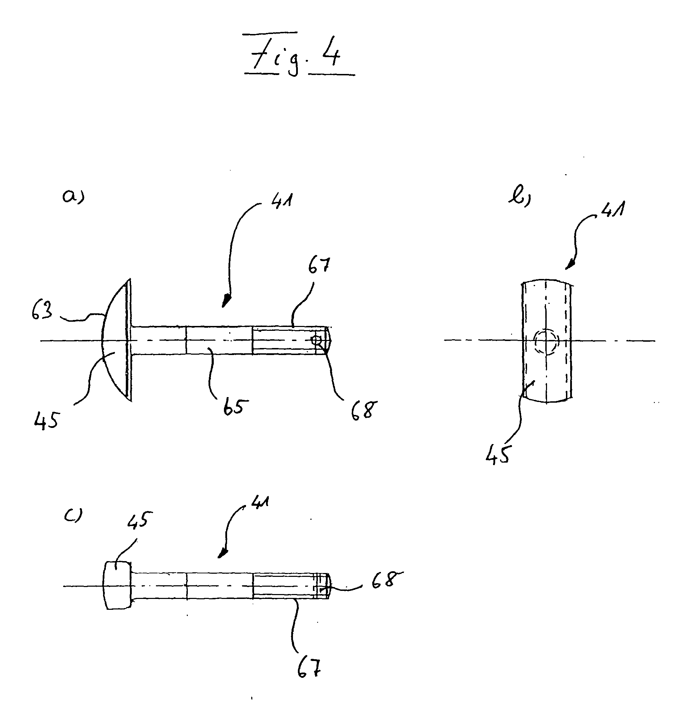

In den Figuren 4a-4c ist der Mitnehmer 41 des erfindungsgemäßen Schwenkgelenks 5 im Detail dargestellt.

Der Mitnehmer 41 hat neben dem Mitnehmerkopf 45, der eine teilkugelförmige Außenseite 63 aufweist, einen Überbrückungsstab 65, der zusammen mit dem Mitnehmerkopf 45 aus einem Stück gefertigt ist.

Der Überbrückungsstab 65 hat an dem vom Mitnehmerkopf 45 abgewandten Ende ein Außengewinde 67, an dem der Betätigungshebel 51 aufgeschraubt werden kann.

An dem freien Ende des Überbrückungsstabs 65 ist ein Loch 68 vorgesehen, das zur Aufnahme einer Sicherheitsspindel gegen unabsichtliches Abdrehen des Betätigungshebels 51 dienen soll.

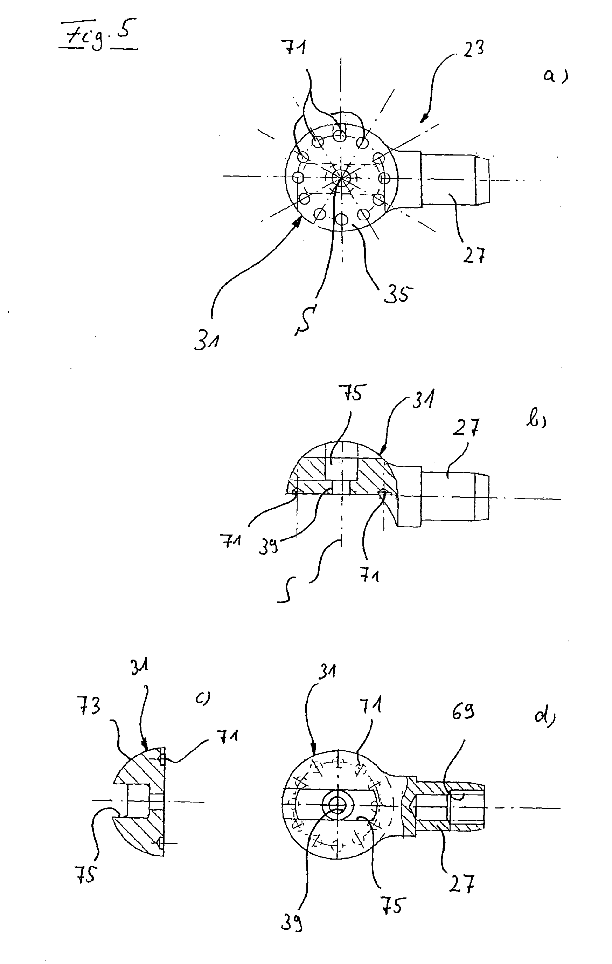

In den Figuren 5a-d ist das zweite Gelenkteil 23 im Detail dargestellt. An dem Armfortsatz 27 ist ein Arm einer Rahmenstruktur anbindbar, wobei der Arm der Armstruktur auch einstückig mit dem Armfortsatz 27 ausgebildet sein kann. Der Armfortsatz 27 kann eine Gewindebohrung 69 aufweisen, über die das Gelenkteil 23 mit einem Arm der Rahmenstruktur (nicht dargestellt) fest verschraubbar ist.

An der im Wesentlichen teilkugelförmigen Außenseite ist eine längliche Aussparungen 75 ausgebildet, in die der Mitnehmerkopf 45 formkomplementär versenkbar ist, wenn der Betätigungshebel 51 entsprechend zugedreht und der Mitnehmer 41 das zweite Gelenkteil 23 auf das erste Gelenkteil 21 mitnehmend zu bewegt. Mit der Außenseite 63 des Mitnehmerkopfs 45 bildet sich eine annähernd halbkugelförmige Außenseite 75 für die Gelenkkopfhälfte 31 des zweiten Gelenkteils 23.

Wie insbesondere in den Figuren 5b und d ersichtlich ist, durchsetzt den Gelenkkopf 31 die Bohrung 39, durch die sich hindurch der Überbrückungsstab 65 des Mitnehmers 41 im montierten Zustand des Schwenkgelenks 5 erstreckt. Die Aufnahme 75 hat eine deutlich größere Abschnittsmessung als die Bohrung 39, wodurch sichergestellt wird, dass der Mitnehmerkopf 45 das Gelenkteil 23 mitnehmen kann.

Wie in den Figuren 5a und 5c ersichtlich ist, hat die Gelenkkopfhälfte 31 an deren Gelenkfläche 35 mehrere Sacklochbohrungen 71, die auf einer Kreisbahn konzentrisch zur Schwenkachse S des Schwenkgelenks 5 liegen.

Die an der Gelenkfläche 35 ausgebildeten zwölf Sackbohrungen 71 dienen dazu, die Schwenkpositionen des Schwenkgelenks 5 ortsfest zu definieren und somit Rastpositionen festzustellen.

Ein Rastmechanismus zwischen dem ersten und dem zweiten Gelenkteil 21, 23 wird mit Hilfe der Sackbohrungen und mit Hilfe von Nasen realisiert, die formkomplementär zu den Bohrungen gebildet sind und an der Gelenkfläche 33 der Gelenkkopfhälfte 29 des ersten Gelenkteils 21 angeordnet sein können.

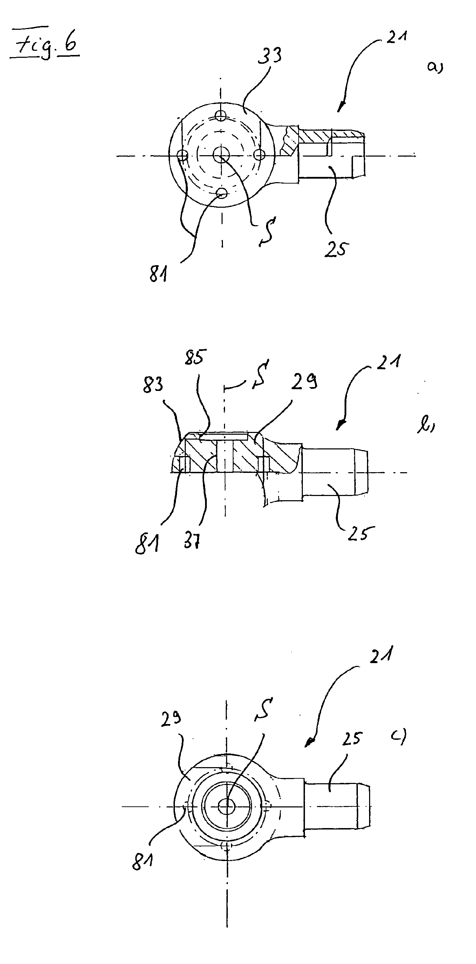

Hierzu wird auf die Figuren 6a-c verwiesen, in denen das erste Gelenkteil 21 des Schwenkgelenks 5 im Detail dargestellt ist. Das Gelenkteil 21 hat wie das zweite Gelenkteil 23 an dem Armfortsatz 25 eine Gewindeinnenbohrung (nicht näher dargestellt), um das erste Gelenkteil 21 an einer nicht dargestellten Skelettarmstruktur zu befestigen. Es sei klar, dass der Armfortsatz 25 auch einstückig mit dem Arm der Armstruktur ausgebildet sein kann.

Wie in den Figuren 6a-c ersichtlich ist, sind vier im 90°-Abstand zueinander angeordnete Stiftaufnahmen an der Schwenkfläche 33 ausgebildet. In der Stiftaufnahme 81 sind Stifte (nicht dargestellt) eingepresst, welche die Nasen bilden, welche rastend mit dem Sacklochbohrungen 71 in dem zweiten Gelenkteil 23 zusammenwirken. Es sei klar, dass die Nasen auch einstückig mit der Gelenkkopfhälfte 29 ausgebildet sein können.

Durch die Gelenkkopfhälfte 29 des ersten Gelenkteils 21 hindurch erstreckt sich die Bohrung 37, durch welche sich der Überbrückungsstab 65 des Mitnehmers 41 erstreckt.

An der teilsphärischen Außenseite 83 der Gelenkkopfhälfte 29 des ersten Gelenkteils 21 ist im Bereich der Bohrung eine Pufferbeilagscheibenaufnahme 85 eingeformt, in dem die Pufferbeilagscheibe 53 sicher aufgenommen ist. Auf diese Weise verlagert sich nicht die Pufferbeilagescheibe 53 während der Betätigung des Betätigungshebels 51.

Mit vier nicht dargestellten Stiften, die in den Stiftaufnahmen 81 festsitzen, ist eine sichere Schwenkposition zwischen den Schwenkteilen 21, 23 in zwölf verschiedenen Positionen gewährleistet, wenn die vier Stifte in den entsprechenden Sacklochbohrungen 71 formschlüssig eingreifen, um eine Verrückung in Schwenkrichtung zu verhindern.

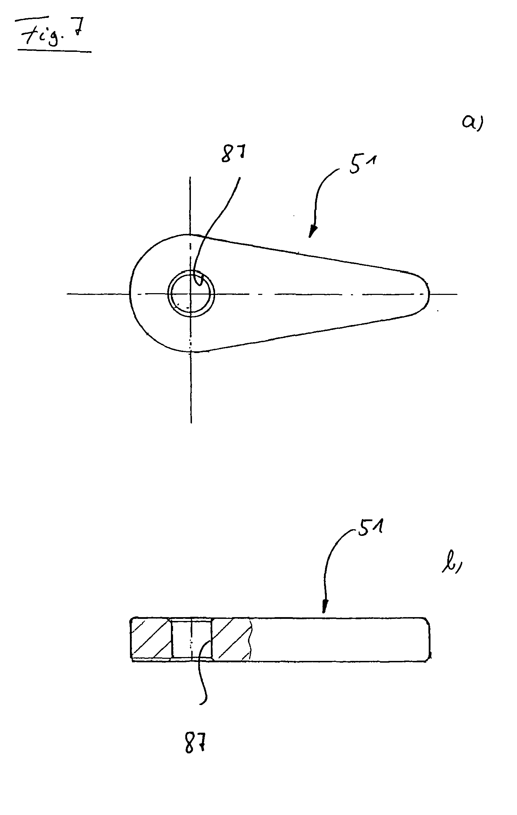

In den Figuren 7a, b ist der Betätigungshebel 51 im Detail dargestellt, der an seinem breiten Abschnitt ein Gewindeloch 87 umfasst, das mit dem Außengewinde 67 des Überbrückungsstabs 65 des Mitnehmers 41 zusammenwirkt, um über den Mitnehmer 41 die Gelenkteile gegeneinander zu verspannen, wenn ein Stift formschlüssig in der Stiftaufnahme 81 aufgenommen ist.

Im montierten Zustand gemäß den Figuren 2 und 3 drückt die Schaubfeder 47 ständig über den Mitnehmer 41 die Gelenkteile aneinander, so dass die Gelenkflächen 33, 35 aneinander liegen und die Stifte in die jeweiligen Sacklochbohrungen 71 formschlüssig aufgenommen und verrastet sind. Sollte der Betätigungshebel aufgedreht sein, können durch manuelle Betätigungskraft die Gelenkteile in Schwenkachsrichtung voneinander wegbewegt werden, wodurch die Sacklochbohrungen 71 von den Stiften befreit werden und ein ungehindertes Verschwenken um die Schwenkachse S erreicht wird. Sollte die manuelle Betätigungskraft wegfallen, schnappen die Stifte bei der nächsten fluchtenden Positionierung in die jeweiligen Sacklochbohrungen 71 ein, wodurch eine definierte Schwenkposition erreicht wird, in der ein Verrücken der Gelenkteile 21, 23 in Schwenkrichtung ausgeschlossen ist. Anschließend werden über den Betätigungshebel 51 die Gelenkteile 21, 23 gegeneinander verspannt werden.

Auf diese Weise ist es möglich, ein Schwenkgelenk mit unterschiedlichen definierten Schwenkpositionen bereitzustellen, wobei auf einfache Weise das Schwenkgelenk betätigt werden kann und keine zusätzlichen Bauteile anzubringen sind, um hohe Belastungskräfte zwischen den Gelenkteilen zu übertragen.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Lenkervorbau
- 3: Sattelstütze
- 5: Schwenkgelenk
- 7: Greifabschnitt
- 9: Sattel
- 21, 23: Gelenkteil
- 25, 27: Armfortsatz
- 29, 31: Gelenkkopfhälfte
- 33,35: Gelenkfläche
- 37,39: Bohrung
- 41: Mitnehmer
- 45: Mitnehmerkopf
- 47: Spiralfeder
- 51: Betätigungshebel
- 53: Pufferbeilagscheibe
- 61: Drehring
- 63: Außenseite
- 65: Überbrückungsstab
- 67: Außengewinde
- 69: Gewindebohrung
- 71: Sacklochbohrung
- 75: Aussparung
- 81: Stiftaufnahme
- 83: teilsphärische Außenseite
- 85: Gewindepufferscheibenaufnahme
- 87: Gewindeloch
- S: Schwenkachse

## Patentansprüche

1. Schwenkgelenk (5) für zwei miteinander zu koppelnde Bauteile, wie Stangen oder Rohre, umfassend: zwei mit dem jeweiligen Bauteil fest verbindbare und/oder verbundene Gelenkteile (21, 23), wenigstens zwei vorbestimmte Schwenkpositionen, einen Rast- oder Schnappmechanismus zum Abgeben einer Rast- oder Schnappkraft, welche die Gelenkteile (21, 23) in die jeweilige Schwenkposition drängt und die zu überwinden ist, um die Gelenkteile (21, 23) aus der einen Schwenkposition in eine andere Schwenkposition zu verschwenken, und eine Feststelleinrichtung zum gegenseitigen, kraftschlüssigen Verspannen der Gelenkteile (21, 23) in deren jeweiligen Schwenkposition.

2. Schwenkgelenk nach Anspruch 1, bei dem eine Rast- oder Schnappkraftrichtung parallel einer Verspannkraftrichtung der Feststelleinrichtung ausgerichtet ist, insbesondere mit der Verspannkraftrichtung zusammenfällt und/oder bei dem eine Rast- oder Schnappkraftrichtung parallel einer Schwenkachse (S) des Schwenkgelenks (5) ausgerichtet ist, insbesondere mit der Schwenkachse (S) zusammenfällt.

3. Schwenkgelenk (5) nach einem der vorstehenden Ansprüche, bei dem die Rast- oder Schnappkraft und eine Verspannkraft der Feststelleinrichtung die Gelenkteile (21, 23) aufeinander zu drückt und/oder bei dem der Rast- oder Schnappmechanismus eine elastisch verformbare Feder, insbesondere eine vorgespannte Druckfeder, aufweist.

4. Schwenkgelenk (5) nach einem der vorstehenden Ansprüche, bei dem die Feststelleinrichtung einen Spannzustand, in dem die Gelenkteile (21, 23) gegeneinander verspannt sind, und einen Freigabezustand aufweist, in dem die Gelenkteile (21, 23) entgegen der Rast- oder Schnappkraft des Rast- oder Schnappmechanismus insbesondere durch eine manuelle Betätigungskraft aus der jeweiligen Schwenkposition befreibar sind, wobei insbesondere in dem Freigabezustand der Feststelleinrichtung die Gelenkteile (21, 23) insbesondere in einer Schwenkachsenrichtung voneinander weg verlagerbar sind, um einen formschlüssigen Eingriff der Gelenkteile (21, 23) in einer Schwenkposition zu lösen, wobei insbesondere die Gelenkteile (21, 23) in dem Freigabezustand und bei Verlagerung aus dem formschlüssigen Eingriff insbesondere stufenlos um eine Schwenkachse (S) des Schwenkgelenks (5) verschwenkbar sind.

5. Schwenkgelenk (5) nach einem der vorstehenden Ansprüche, bei dem die Feststelleinrichtung eine Verspannkraft erzeugt, deren Richtung parallel einer Rast- oder Schnappkraftrichtung des Rast- oder Schnappmechanismus und/oder einer Schwenkachse (S) des Schwenkgelenks (5) ausgerichtet ist, insbesondere mit der Rast- oder Schnappkraftrichtung und/oder der Schwenkachse (S) zusammenfällt.

6. Schwenkgelenk (5) nach einem der vorstehenden Ansprüche, das einen starren Mitnehmer (41) umfasst, der derart mit einer Feder des Rast- oder Schnappmechanismus zusammenwirkt, dass die Gelenkteile (21, 23) auf einander zu gedrückt werden, um insbesondere in Anschlag zu kommen, und/oder das einen starren Mitnehmer (41) umfasst, der mit der Feststelleinrichtung zum Verspannen der Gelenkteile (21, 23) derart zusammenwirkt, dass die Gelenkteile (21, 23) gegeneinander gedrückt werden, insbesondere dass eine Vorspannung einer Feder des Rast- oder Schnappmechanismus erhöht wird.

7. Schwenkgelenk (5) nach einem der vorstehenden Ansprüche, bei dem die Feststelleinrichtung einen Schnellspanner mit einem Drehexzenter oder einen Schraubmechanismus umfasst, wobei ein Handbetätigungsteil der Feststelleinrichtung bei dessen Betätigung den Mitnehmer (41) verlagert, so dass der Mitnehmer (41) ein Gelenkteil (23) mitnimmt und auf das andere Gelenkteil (21) zu bewegen kann, und/oder bei dem zwischen der Feststelleinrichtung und dem dazu benachbarten Gelenkteil (21, 23) ein Pufferelement insbesondere aus einem Elastomer angeordnet ist.

8. Schwenkgelenk (5) nach einem der vorstehenden Ansprüche, bei dem zur Festlegung der vorbestimmten Schwenkpositionen Formschlüsse der Gelenkteile (21, 23) miteinander vorgesehen sind, durch welche eine relative Schwenkbewegung der Gelenkteile (21, 23) um eine Schwenkachse (S) des Schwenkgelenks (5) blockiert ist, und/oder bei dem jedes Gelenkteil (21, 23) eine Gelenkfläche (33, 35) aufweist, wobei die Gelenkflächen (33, 35) in den wenigstens zwei vorbestimmte Schwenkpositionen aneinander liegen, wobei insbesondere die Gelenkflächen (33, 35) größtenteils plan sind und/oder die Gelenkflächen (33, 35) eine Schwenkebene des Schwenkgelenks (5) definieren, zu der eine Schwenkachse (S) des Schwenkgelenks (5) lotrecht steht.

9. Schwenkgelenk (5) nach Anspruch 8, bei dem eine der Gelenkflächen (33, 35) wenigstens einen Rastvorsprung aufweist, der formkomplementär zu wenigstens zwei Rastaussparungen in der anderen Gelenkfläche (33, 35) ausgebildet ist und insbesondere sich senkrecht von der Gelenkfläche (33, 35) weg erstreckt, wobei der wenigstens eine Rastvorsprung insbesondere vollständig in die jeweilige Rastaussparung passt, um die wenigstens zwei vorbestimmten Schwenkpositionen festzulegen, wobei insbesondere zwei bis 360 oder 720 Rastvorsprünge, vorzugsweise 4, 6, 8, 12 oder 24 Rastvorsprünge, vorgesehen sind, denen 2, 3, oder 4 Rastaussparungen zugeordnet sind, und umgekehrt.

10. Schwenkgelenk (5) nach Anspruch 8 oder 9, bei dem die Rastvorsprünge und die Rastaussparungen in äquidistante Abständen zueinander und insbesondere auf konzentrischen Kreisbahnen gleichen Radius angeordnet sind.

11. Schwenkgelenk nach einem der vorstehenden Ansprüche, bei dem die Gelenkteile (21, 23) jeweils eine Gelenkkopfhälfte (29, 31) bilden, wobei insbesondere jede Gelenkkopfhälfte (29, 31) eine von einer Gelenkfläche (33, 35) abgewandte im Wesentlichen teilsphärische Außenseite (63) aufweist.

12. Schwenkgelenk (5) nach einem der vorstehenden Ansprüche, bei dem die Gelenkteile (21, 23) im montierten Zustand des Schwenkgelenks (5) miteinander fluchtende Bohrungen aufweisen, durch die hindurch sich ein Mitnehmer (41) erstreckt, der insbesondere an einem Ende einen Mitnehmerkopf (45) aufweist und an dessen anderen Ende die Feststelleinrichtung angreift, um die Spannkräfte zwischen den Gelenkteilen (21, 23) einzuleiten, wobei insbesondere zwischen dem Mitnehmerkopf (45) und dem benachbarten Gelenkteil (21, 23) eine Feder, insbesondere eine Schraubendruckfeder, angeordnet ist, welche die Rast- oder Schnappkraft den Gelenkteilen (21, 23) über den Mitnehmer (41) mitteilt.

13. Schwenkgelenk nach Anspruch 12, bei dem das dem Mitnehmerkopf (45) benachbarte Gelenkteil (21, 23) eine Vertiefung aufweist, in der der Mitnehmerkopf (45) zumindest in einem Spannzustand der Feststelleinrichtung insbesondere vollständig versenkt ist.

14. Baugruppe bestehend aus einem ersten ortsfesten Langbauteil, wie einer Stange oder einem Rohr, einem zweiten beweglichen Langbauteil, wie einer Stange oder einem Rohr, und einem nach einem der vorstehenden Ansprüche ausgeführtes Schwenkgelenk (5).

15. Baugruppe nach Anspruch 14, bei der der Mitnehmerkopf (45) eine Längsrichtung aufweist, die mit der Längsrichtung des ortsfesten Langbauteils zusammenfällt und/oder welche Baugruppe ein Teil einer Rahmenstruktur ist, die aus mehreren miteinander zu verbindenden Stangen oder Rohren gebildet ist.
